# FASCICULE DE BREVET EUROPEEN

(11) **EP 0 474 101 B1**
(45) Date de publication et mention de la délivrance du brevet: **30.11.1994**
(21) Numéro de dépôt: 91114401.2
(22) Date de dépôt: 28.08.1991
(51) Int. Cl.: G04C 10/00, H02K 7/11, H02K 35/02

(54) **Dispositif producteur de courant électrique**
Vorrichtung zum Erzeugen elektrischer Energie
Electric current generating device

(30) Priorité: 05.09.1990 CH 2880/90
(43) Date de publication de la demande: 11.03.1992
(73) Titulaire: MICROMAG S.A., CH-1197 Prangins (CH)
(72) Inventeur: Depery, Jean, CH-1197 Prangins (CH); Groothuis, Michiel, CH-2610 Saint-Imier (CH)
(74) Mandataire: Robert, Jean S.

(56) Documents cités:
- EP-A- 0 170 303
- GB-A- 2 197 969
- US-A- 4 249 096
- PATENT ABSTRACTS OF JAPAN, vol. 9, no. 126 (E-318)(1849) 31. Mai 1985 & JP-A-60013464
- HOROLOGICAL JOURNAL, vol. 132, no. 4, Octobre 1989, Ashford, GB, pages 124-125; A.G.RANDALL: "Technical Report - The Jean d'Eve Samara"

## Description

La présente invention a pour objet un dispositif producteur de courant électrique, à micro-générateur, dans lequel le rotor du générateur est relié à un organe moteur par des moyens d'accouplement autorisant des décalages angulaires entre ces deux éléments.

De tels dispositifs producteurs de courant électrique sont connus en soi. L'un d'eux, par exemple, est décrit et représenté dans le brevet USA No 4.644.246. Ils sont en particulier appliqués à l'horlogerie, servant à charger des condensateurs qui, eux-mêmes, alimentent des micro-moteurs d'entraînement des organes indicateurs.

Dans les dispositifs connus, tel celui du brevet USA susmentionné, la liaison entre le rotor du générateur de courant et son dispositif moteur est assurée par un ressort porté par l'organe moteur et qui est relié audit rotor. Ce dernier étant, sinon empêché de tourner, du moins retenu par la force magnétique agissant entre lui et le stator du générateur, la rotation de l'organe moteur produit tout d'abord l'armage de ce ressort puisqu'il est interposé entre cet organe moteur et le rotor. Lorsque la force de ce ressort surmonte la force magnétique retenant le rotor, ce dernier "décroche" et vient se placer dans la position dans laquelle le ressort est désarmé.

Il s'ensuit que le rotor du générateur effectue de rapides mouvements rotatifs, successifs, au cours de chacun desquels il produit du courant électrique.

L'inconvénient de telles dispositions réside notamment dans le fait que les écarts angulaires entre l'organe moteur et le rotor du générateur sont obligatoirement limités, puisqu'un élément mécanique (le ressort) est interposé entre eux. Il est même préférable de prévoir des moyens rigides de butée empêchant une surtension du ressort intermédiaire. En outre, vu la dimension du dispositif, qui est destiné à l'horlogerie, le ressort interposé entre le rotor du générateur et l'organe moteur est de très petite dimension : il est donc difficile à réaliser, peu robuste et difficile à monter.

Le but de la présente invention est de remédier à ces inconvénients.

Ce but est atteint grâce aux moyens définis dans la revendication 1.

Il est à remarquer que l'emploi d'accouplements magnétiques est connu en soi :

C'est ainsi que le brevet USA No 4.249.096 décrit l'emploi d'une force magnétique interposée entre le rotor et le stator d'un générateur de courant électrique dans le but de faciliter le mouvement de rotation du rotor. La demande de brevet anglais No 2.197.969 décrit l'emploi d'un accouplement magnétique disposé entre le moteur d'une pièce d'horlogerie et les organes indicateurs de celle-ci. Quant à la demande de brevet japonais No 60-13464, elle décrit un accouplement magnétique disposé entre un pendule oscillant et l'aimant d'un générateur de courant.

Le dessin représente, à titre d'exemple, trois formes d'exécution de l'objet de l'invention.

La fig. 1 est une vue en plan d'une première forme d'exécution d'un dispositif producteur de courant électrique utilisable en horlogerie, certaines parties ayant été ôtées pour accroître la clarté du dessin.

La fig. 2 est une coupe suivant la ligne II-II de la fig. 1.

La fig. 3 est une coupe, suivant la ligne III-III de la fig. 4, d'une deuxième forme d'exécution d'un tel dispositif.

La fig. 4 est une coupe suivant la ligne IV-IV de la fig. 3, et

La fig. 5 est une coupe, analogue à celle de la fig. 4, d'une troisième forme d'exécution d'un dispositif producteur de courant également utilisable en horlogerie.

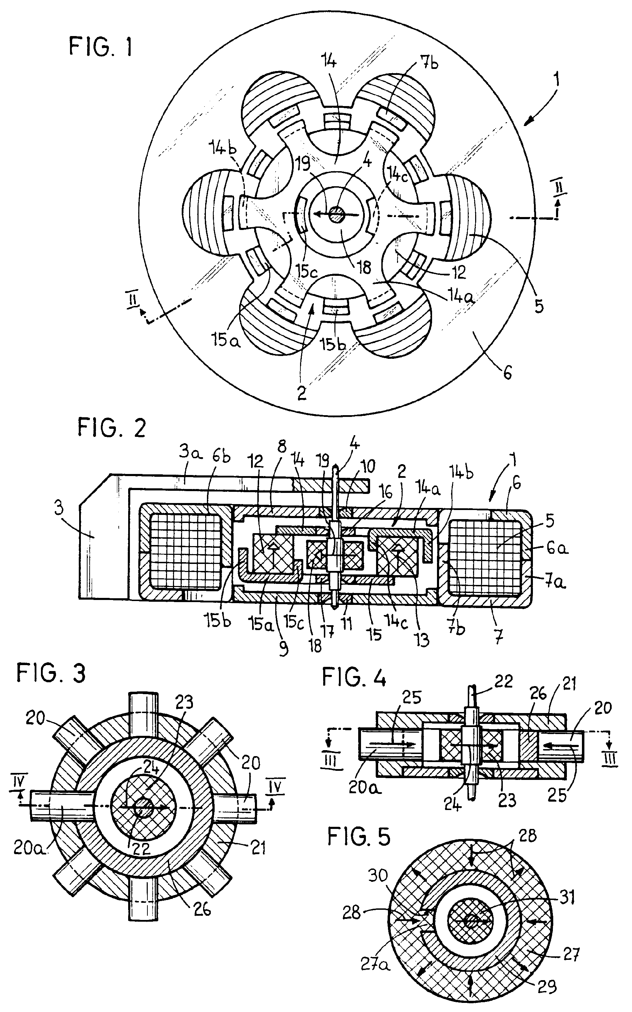

Le dispositif producteur de courant électrique représenté aux figs. 1 et 2 comprend un micro-générateur de courant comprenant un stator, désigné d'une façon générale par 1, et un rotor, désigné d'une façon générale par 2, et un dispositif moteur comprenant une masse rotative oscillante 3 munie d'une planche 3a, semi-circulaire, fixée en un point correspondant au centre de son diamètre, à un arbre rotatif 4.

Le dispositif étant destiné à être monté sur une montre-bracelet, l'arbre 4 coïncidera avec le centre du mouvement de cette montre et la masse rotative oscillante sera située à la périphérie de celui-ci.

Le stator 1 du micro-générateur comprend un enroulement annulaire 5 portant deux pièces polaires formées de deux couronnes 6 et 7, la première étant appliquée sur l'une des faces de l'enroulement annulaire 5 et la seconde sur l'autre. Ces deux pièces polaires 6 et 7 présentent chacune un rebord annulaire extérieur 6a, 7a, respectivement, entourant l'enroulement 5. Elles présentent en outre chacune des languettes intérieures 6b, 7b, respectivement, repliées à angle droit et qui s'appliquent contre la face interne de l'enroulement 5.

Deux disques 8 et 9 sont chassés à l'intérieur des pièces polaires 6 et 7 respectivement. Ces disques portent chacun un palier 10, respectivement 11, servant au pivotement de l'arbre 4.

Le rotor 2 comprend un aimant annulaire 12 à aimantation axiale, indiquée par les flèches 13 de la fig. 2 et qui porte, sur chacune de ses faces axiales, une pièce d'armature 14, respectivement 15, formée d'une rondelle à bras radiaux 14a, respectivement 15a, dont l'extrémité, en 14b, respectivement 15b, est repliée à angle droit. Ces pièces d'armature portent, en leur centre, des paliers 16, respectivement 17, traversés librement par l'arbre 4 qui supporte ainsi le rotor 2. Les deux pièces d'armature 14 et 15 présentent chacune une languette intérieure 14c, 15c, respectivement, repliée à angle droit, appliquée contre la face interne de l'aimant permanent annulaire 12, qui sont diamétralement opposées et dont le but sera indiqué ci-après.

L'arbre 4, qui constitue l'organe d'entraînement du rotor 2, porte un aimant permanent 18, de forme annulaire, aimanté diamétralement, comme l'indiquent les flèches 19 des figs 1 et 2.

Lorsque le dispositif est au repos, le rotor est maintenu dans l'une ou l'autre de ses différentes positions angulaires stables par la force magnétique qui s'exerce entre lui et le stator. L'aimant permanent rotatif 18 occupe alors une position angulaire dans laquelle ses deux pôles se trouvent situés en regard des deux languettes 14c et 15c des pièces d'armature du rotor, qui constituent des pièces polaires.

Lorsque l'aimant 18 est entraîné en rotation par la masse rotative oscillante 3 qui se déplace sous l'effet des mouvements qu'effectue le porteur de la montre, la force magnétique agissant entre lui et le rotor augmente au fur et à mesure de sa rotation. Lorsque la force magnétique s'exerçant entre cet élément 18 et le rotor surmonte la force magnétique s'exerçant entre le rotor et le stator, le rotor "décroche" et vient rapidement se placer dans la position où les deux pièces polaires 14c et 15c se trouvent sur le diamètre des pôles de l'aimant 18. Au cours de ce bref mais rapide mouvement du rotor, un courant électrique est produit, qui sera envoyé à un condensateur servant à alimenter le circuit électronique (circuit intégré) de la montre.

Il est à remarquer que, la liaison entre l'organe moteur du micro-générateur et le rotor 2 de celui-ci étant magnétique, il n'y a pas de limitation dans les décalages angulaires entre l'aimant et le rotor de sorte que, quelle que soit la vitesse à laquelle la masse rotative oscillante 3 peut être propulsée, selon les mouvements qu'effectue le porteur de la montre, il ne se produit aucune détérioration du mécanisme. En outre, la masse rotative 3 peut tourner dans n'importe quel sens et d'un nombre quelconque de tours non seulement sans que cela produise de risque de détérioration, mais encore en entraînant le rotor du micro-générateur, dans un sens ou dans l'autre, et par conséquent en produisant du courant dans les deux cas.

La forme d'exécution des figs. 3 et 4, dont seul le rotor du générateur a été représenté, diffère de celle des figs. 1 et 2 principalement par le fait que l'aimant permanent annulaire 12 du rotor de la première forme d'exécution est remplacé par un ensemble d'aimants permanents 20, au nombre de huit, disposés radialement sur une monture rotative circulaire 21 montée librement sur un arbre central 22.

Cet arbre porte un aimant d'entraînement 23, analogue à l'aimant 18 de la première forme d'exécution, aimanté radialement comme l'indique la flèche 24 des figs. 3 et 4.

Les aimants radiaux 20, constitués par des barreaux aimantés longitudinalement, comme l'indiquent les flèches 25 de la fig. 4, sont en appui contre une pièce d'armature annulaire 26, en matière très perméable aux champs magnétiques, logée à l'intérieur de la monture 21. Seul l'un desdits aimants, désigné par 20a, est plus long que les autres et s'étend radialement, en direction du centre, dans un dégagement ménagé à cet effet dans la monture 26.

Il s'ensuit que l'aimant permanent 23 tend à occuper une position dans laquelle le diamètre suivant lequel il est aimanté vient se placer dans l'axe de l'aimant 20a du rotor plus long que les autres, le fonctionnement étant le même que dans la première forme d'exécution : lorsque la masse rotative d'entraînement de l'aimant annulaire 23, non représentée, déplace ce dernier pour l'amener dans une position dans laquelle la force magnétique régnant entre lui et le rotor dépasse la force magnétique régnant entre le rotor et le stator, non représenté, du générateur, le rotor "décroche" et vient brusquement se placer dans la position représentée aux figs. 3 et 4, après avoir effectué un tour.

Il est à remarquer que, dans la forme d'exécution des figs. 1 et 2, l'élément magnétique du rotor, avec lequel coopère l'aimant d'entraînement, est constitué par deux languettes de l'armature du rotor, diamétralement opposées. On pourrait envisager le cas d'une construction dans laquelle l'armature ne présenterait qu'une seule languette ou, au contraire, dans laquelle elle comporterait plusieurs paires de languettes diamétralement opposées.

Dans cette forme d'exécution des figs. 1 et 2, l'aimant du rotor, qui est annulaire, est à aimantation axiale, alors que, dans la forme d'exécution des figs. 3 et 4, le rotor présente plusieurs aimants en forme de barreaux disposés radialement. On pourrait également envisager le cas où l'aimant du rotor serait annulaire, mais à aimantation radiale, et multipolaire.

Une telle variante est illustrée à la fig. 5 où l'aimant annulaire multipolaire du rotor est désigné par 27, ses différents pôles magnétiques étant représentés par des flèches 28. Cet aimant est engagé sur une monture 29, en forme de bague fendue, réalisée en une matière très perméable aux champs magnétiques. Un prolongement radial 27a, dirigé vers l'intérieur, d'un des pôles de l'aimant 27, est engagé dans la fente, désignée par 30, de la bague 29. Ce prolongement 27a constitue l'élément magnétique avec lequel coopère l'aimant annulaire d'entraînement du rotor, désigné par 31.

## Revendications

1. Dispositif producteur de courant électrique, à micro-générateur, dans lequel le rotor du générateur est relié à un organe moteur par des moyens d'accouplement autorisant des décalages angulaires entre ces deux éléments, caractérisé par le fait que lesdits moyens d'accouplement sont constitués par un aimant permanent (18; 23; 31) situé à proximité dudit rotor (12; 20; 27), et qui tourne, entraîné par un dispositif moteur (3), autour d'un axe coaxial (4, 22) à celui du rotor, cet aimant permanent (18; 23; 31) présentant au moins une paire de pôles diamétralement opposés par rapport audit axe de rotation, qui coopèrent avec au moins un élément magnétique (18; 20; 27) solidaire dudit rotor, le tout de manière que, lorsque la force magnétique agissant entre l'aimant permanent rotatif et le rotor du générateur surmonte la force magnétique agissant entre le rotor et le stator de celui-ci, le rotor soit attiré par l'aimant permanent jusqu'à rejoindre la position dans laquelle l'un de ses éléments magnétiques vient à coïncider avec le diamètre des pôles de l'aimant, en un rapide mouvement rotatif générateur d'un courant électrique.

2. Dispositif suivant la revendication 1, caractérisé par le fait que ledit aimant permanent rotatif (18; 23; 31) est situé à l'intérieur du rotor (12; 20; 29) du générateur, lequel rotor est annulaire.

3. Dispositif suivant la revendication 1, caractérisé par le fait que ledit aimant permanent rotatif (18) est bipolaire.

4. Dispositif suivant la revendication 1, caractérisé par le fait que lesdits éléments magnétiques du rotor avec lesquels coopère l'aimant permanent rotatif sont constitués par des parties, formant pièces polaires (14, 15; 26; 29), d'une armature que comporte le rotor.

5. Dispositif suivant la revendication 4, caractérisé par le fait que le rotor comprend un aimant annulaire (12) à aimantation axiale et deux pièces d'armature (14, 15) formées chacune d'un disque appliqué sur une des faces dudit aimant annulaire, chacun desdits disques présentant une languette (14c, 15c) faisant saillie sur son bord intérieur et qui est repliée sur la face interne de l'aimant annulaire (12), ces deux languettes se faisant face et constituant les pièces polaires avec lesquelles coopère l'aimant permanent rotatif (18).

6. Dispositif suivant la revendication 1, caractérisé par le fait que le rotor comprend plusieurs aimants en forme de barreaux (20) disposés radialement par rapport à son axe de rotation sur une monture annulaire (21) à l'intérieur de laquelle tourne l'aimant permanent rotatif (23), au moins un (20a) desdits barreaux (20) étant plus long que les autres de façon que son extrémité intérieure, qui constitue ledit élément magnétique, soit plus rapprochée de l'aimant permanent rotatif (23) que les extrémités intérieures des autres barreaux.

7. Dispositif suivant la revendication 1, caractérisé par le fait que l'aimant permanent (18; 23; 31) est monté rotativement sur le stator (8, 9) du générateur.

8. Dispositif suivant la revendication 7, caractérisé par le fait que le rotor (14, 15; 21) du générateur est monté de façon à pouvoir tourner librement sur un arbre (4; 22) portant l'aimant permanent rotatif (18; 23).

9. Dispositif suivant la revendication 1, caractérisé par le fait que l'aimant permanent rotatif (18; 23) est monté sur un arbre (4; 22) entraîné par le dispositif moteur (3).

10. Dispositif suivant la revendication 9, appliqué à une montre-bracelet, caractérisé par le fait que ledit dispositif moteur est constitué par une masse rotative oscillante (3), montée sur ledit arbre (4), et qui produit, lors des mouvements auxquels est soumise la montre, la rotation de cet arbre.

11. Dispositif suivant la revendication 1, caractérisé par le fait que le rotor comprend un aimant annulaire multipolaire (27), à aimantation radiale, dont au moins un (27a) des pôles intérieurs est plus long que les autres et constitue ainsi ledit élément magnétique.

## Patentansprüche

1. Vorrichtung zur Herstellung elektrischen Stroms in Form eines Mikrogenerators, bei der der Rotor des Generators mit einem Motor über Kupplungsmittel verbunden ist, die Winkelversetzungen zwischen diesen beiden Elementen erlauben, dadurch gekennzeichnet, daß die Kupplungsmittel aus einem Permanentmagneten (18; 23; 31) bestehen, der nahe des Rotors (12; 20; 27) angeordnet ist, wobei der Permanentmagnet, durch eine Motorvorrichtung (3) angetrieben, um eine Achse (4, 22) rotiert, die zu der des Rotors koaxial ist, dieser Permanentmagnet (18; 23; 31) weist zumindest ein Paar von Polen auf, die einander bezüglich der Drehachse diametral gegenüberliegen und mit zumindest einem Magnetelement (18; 20; 27), das mit dem Rotor verbunden ist, kooperieren, das Ganze auf eine solche Weise, daß, wenn die Magnetkraft zwischen dem rotierenden Permanentmagneten und dem Rotor des Generators die Magnetkraft, die zwischen dem Rotor und dem Stator desselben wirken, übersteigt, der Rotor durch den Permanentmagneten angezogen wird, bis er, mit einer raschen Drehbewegung, die einen elektrischen Strom erzeugt, wieder in eine Lage gelangt, in der eines seiner magnetischen Elemente mit dem Durchmesser der Pole des Magneten zusammenfällt.

2. Vorrichtung nach Anspruch 1, dadurch gekennzeichnet, daß der drehbare Permanentmagnet (18; 23; 31) im Inneren des Rotors (12; 20; 29) des Generators, wobei dieser Rotor ringförmig ist, angeordnet ist.

3. Vorrichtung nach Anspruch 1, dadurch gekennzeichnet, daß der drehbare Permanentmagnet (18) bipolar ist.

4. Vorrichtung nach Anspruch 1, dadurch gekennzeichnet, daß die magnetischen Elemente des Rotors mit denen der drehbare Permanentmagnet zusammenwirkt, aus Teilen einer Armatur bestehen, die den Rotor aufweist und polare Teile (14, 15; 26; 29) bildet.

5. Vorrichtung nach Anspruch 4, dadurch gekennzeichnet, daß der Rotor einen Ringmagneten (12) mit axialer Magnetisierung und zwei Armaturteile (14, 15) aufweist, die jeweils aus einer Scheibe bestehen, die auf jeweils einer der Seiten des Ringmagneten aufgebracht sind, jede der Scheiben weist eine Lasche (14c, 15c) auf, die an ihrem Innenrand vorsteht und die zur Innenseite des Ringmagneten (12) umgeschlagen ist, diese beiden Laschen stehen einander gegenüber und bilden die polaren Teile, mit denen der drehbare Permanentmagnet (18) zusammenwirkt.

6. Vorrichtung nach Anspruch 1, dadurch gekennzeichnet, daß der Rotor mehrere Magnete in Fomrm von Barren (20) aufweist, die radial bezüglich seiner Drehachse auf einem Ringträger (21) angeordnet sind, in dessen Innerem der drehbare Permanentmagnet (23) rotiert, wobei zumindest einer (20a) der Barren (20) länger ist als die anderen, auf die Weise, daß sein inneres Ende, daß das Magnetelement bildet, dem drehbaren Permanentmagnet (23) näher liegt, als die inneren Enden der anderen Barren.

7. Vorrichtung nach Anspruch 1, dadurch gekennzeichnet, daß der Permanentmagnet (18; 23; 31) drehbar auf dem Stator (8, 9) des Generators befestigt ist.

8. Vorrichtung nach Anspruch 7, dadurch gekennzeichnet, daß der Rotor (14, 15; 21) des Generators so montiert ist, daß er frei um eine Welle (4; 22) drehbar ist, die den drehbaren Permanentmagneten (18; 23) trägt.

9. Vorrichtung nach Anspruch 1, dadurch gekennzeichnet, daß der drehbare Permanentmagnet (18; 23) auf einer Welle (4; 22) befestigt ist, die durch die Motorvorrichtung (3) verdreht wird.

10. Vorrichtung nach Anspruch 9, die in einer Armbanduhr verwendet wird, dadurch gekennzeichnet, daß die Motorvorrichtung durch eine oszillierende rotative Masse (3) gebildet ist, die auf der Welle (4) befestigt ist und die, während der Bewegungen, denen die Uhr unterworfen ist, die Drehung dieser Welle bewirkt.

11. Vorrichtung nach Anspruch 1, dadurch gekennzeichnet, daß der Rotor einen multipolaren Ringmagneten (27) mit radialer Magnetisierung aufweist, von dem zumindest einer (27a) der inneren Pole länger ist als die anderen und der so das Magnetelement bildet.

## Claims

1. Electric current generating device comprising a micro generator, in which the rotor of the generator is connected to a driving member through coupling means authorizing angular shiftings between these two elements, characterized by the fact that the said coupling means are constituted by a permanent magnet (18;23;31) situated near the said rotor (12;20;27) and which rotates, driven by a driving device (3), around an axis (4,22) which is coaxial to the one of the rotor, this permanent magnet (18;23;31) presenting at least a pair of poles which are diametrically opposed with respect to the said rotation axis, which cooperate with at least one magnetic element (18;20;27) rigid with the said rotor, the whole in such a way that, when the magnetic force acting between the rotatable permanent magnet and the rotor of the generator is higher than the magnetic force acting between the rotor and the stator thereof, the rotor be attracted by the permanent magnet until it reaches the position in which one of its magnetic elements coincides with the diameter of the poles of the magnet, in a rapid rotatable movement which generates an electric current.

2. Device according to claim 1, characterized by the fact that the said rotatable permanent magnet (18;23;31) is situated inner the rotor (12;20;29) of the generator, which rotor is annular.

3. Device according to claim 1, characterized by the fact that the said rotatable permanent magnet (18) is bipolar.

4. Device according to claim 1, characterized by the fact that the said magnetic elements of the rotor with which cooperates the rotatable permanent magnet are constituted by portions, constituting polar members (14,15;26;29), of an armature of the rotor.

5. Device according to claim 4, characterized by the fact that the rotor comprises an annular magnet (12) having an axial magnetization and two armature members (14,15) constituted each from a disc applied on one of the faces of the said annular magnet, each of the said discs presenting a small tongue (14c,15c) protruding on its inner edge and which is bent on the inner face of the annular magnet (12), these two small tongues being situated opposite to each other and constituting the polar members with which cooperates the rotatable permanent magnet (18).

6. Device according to claim 1, characterized by the fact that the rotor comprises several magnets having the shape of bars (20), disposed radially with respect to its axis of rotation on an annular mounting element (21) inner which rotates the rotatable permanent magnet (23) at least one (20a) of the said bars (20) being longer than the other ones so as its inner end, which constitutes the said magnetic element, be closer from the rotatable permanent magnet (23) than the inner ends of the other bars.

7. Device according to claim 1, characterized by the fact that the permanent magnet (18;23;31) is rotatably mounted on the stator (8,9) of the generator.

8. Device according to claim 7, characterized by the fact that the rotor (14,15;21) of the generator is mounted in such a way as to be able to rotate freely on a shaft (4;22) carrying the rotatable permanent magnet (18;23).

9. Device according to claim 1, characterized by the fact that the rotatable permanent magnet (18;23) is mounted on a shaft (4;22) driven by the driving device (3).

10. Device according to claim 9, applied to a wrist-watch, characterized by the fact that the said driving device is constituted by a rotatable oscillating mass (3) mounted on the said shaft (4) and which produces, during the movements to which is submitted the watch, a rotation of this shaft.

11. Device according to claim 1, characterized by the fact that the rotor comprises a multipolar annular magnet (27), having a radial magnetization, at least one (27a) of the inner poles of which is longer than the other ones and which constitutes this way the said magnetic element.
